# EUROPEAN PATENT APPLICATION

(11) **EP 1 126 371 A2**
(43) Date of publication of application: **22.08.2001**
(21) Application number: 01301360.2
(22) Date of filing: 16.02.2001
(51) Int. Cl.: G06F 9/50

(54) **Service providing apparatus transmitting apparatus, receiving apparatus, and receiving method**

(30) Priority: 16.02.2000 JP 2000043559
(71) Applicant: SONY CORPORATION, Tokyo 141 (JP); Information Broadcasting Laboratories, Inc., Taito-ku, Tokyo 111-0035 (JP)
(72) Inventor: Nishio, Fumihiko, c/o Intellectual Property, Shinagawa-ku, Tokyo 141 (JP); Gonno, Yoshihisa, c/o Intellectual Property, Shinagawa-ku, Tokyo 141 (JP); Yamagishi, Yasuaki, c/o Intellectual Property, Shinagawa-ku, Tokyo 141 (JP)
(74) Representative: Turner, James Arthur

(57) **Abstract**

A receiving apparatus is disclosed, that comprises a receiving means for receiving directory information, a directory storing means for storing the received directory information, a directory searching means for searching the content of the directory corresponding to searching and executing requests of the user, a client activating means for activating a client program for receiving a requested service corresponding to the searched result, a client executing means for executing the activated client program, a client executing means for executing the activated client program, and a communication controlling means for controlling a communication between a client and a server, wherein a desired service is searched from the directory and a server selection algorithm stored in the searched directory entry is executed so as to select a server connected to the client.

## Description

The present invention relates to an information providing apparatus, a transmitting apparatus, a receiving apparatus, and a receiving method, for example (though not exclusively) for use with services for an unspecified number of users provided by servers connected to a network.

As represented with a service providing system using world wide web servers, an information - service providing system using a server - client model has been structured and used on the Internet. In the service - client model, a client program that operates on the user terminal unit sends a request to a server through the Internet. As a response of the request, the user receives a predetermined service.

When the number of clients increases and many clients send their requests to a server at a time, the load of the process concentrates to the server and thereby the service availability deteriorates. In other words, the users cannot quickly access the service. To prevent the service availability from deteriorating, the load applied to the server should be distributed by a plurality of servers.

However, conventionally, a server that processes requests of clients performs a load distribution process. In other words, the server distributes requests of clients to proper servers. As a result, the problem of which requests of clients concentrate to one server cannot be solved. In addition, the server side should perform the load distribution process. As a result, the load applied to the server increases.

Various respective aspects and features of the invention are defined in the appended claims.

Embodiments of the present invention can provide an information providing apparatus, a transmitting apparatus, a receiving apparatus, and a receiving method that allow the load applied to the server side to alleviate.

A first aspect of the present invention is a service providing apparatus, comprising a program inputting means for inputting a server program for executing a service, a program activating means for activating the server program, a program executing means for executing the server program, a service condition storing means for storing a service condition about a service that is provided, a service registering means for registering a service to a directory along with its service condition, and a communication controlling means for controlling a communication, wherein the service condition of the service is registered to the directory along with location information of a server that provides the service.

A second aspect of the present invention is a transmitting apparatus, comprising a communication controlling means for controlling a communication with a service providing apparatus, a directory registering means for registering directory information received through the communication controlling means, a directory storing means for storing the registered directory information, and a transmitting means for transmitting the content of the directory storing means to a receiving apparatus, wherein information about a plurality of servers that provide the same service is stored to one directory entry, wherein a server selection algorithm corresponding to the service conditions of the servers is added to the directory entry, and wherein the directory information containing the server selection algorithm is stored to the directory storing means.

A third aspect of the present invention is a receiving apparatus, comprising a receiving means for receiving directory information, a directory storing means for storing the received directory information, a directory searching means for searching the content of the directory corresponding to searching and executing requests of the user, a client activating means for activating a client program for receiving a requested service corresponding to the searched result, a client executing means for executing the activated client program, a client executing means for executing the activated client program, and a communication controlling means for controlling a communication between a client and a server, wherein a desired service is searched from the directory and a server selection algorithm stored in the searched directory entry is executed so as to select a server connected to the client.

A fourth aspect of the present invention is a receiving method, comprising the steps of receiving directory information from a transmitting apparatus, storing the received directory information, searching the stored directory for a desired service corresponding to a search request and an execution request of the user, executing a server selection algorithm stored in a searched directory entry so as to select a server connected to a client, activating a client program for receiving the requested service from the selected server, and executing the activated client program.

According to embodiments of the present invention, the information providing apparatus transmits information representing the quality of service and the service condition to the transmitting apparatus along with the server location. The transmitting apparatus collects information from a plurality of server apparatuses that provide the same service. Directory information that contains an algorithm for selecting a proper one from the plurality of server apparatuses is created. The directory information is transmitted to a plurality of receiving apparatuses. When a receiving apparatus receives a service, the receiving apparatus can properly pre-select one from a plurality of servers corresponding to the server selection algorithm contained in a directory entry for a service. As a result, the load of the server can be distributed. In addition, the receiving apparatus side can autonomously perform a process corresponding to the service providing condition of each server.

The invention will now be described by way of example with reference to the accompanying drawings, throughout which like parts are referred to by like references, and in which:
Fig. 1 is a schematic diagram showing an example of the structure of a service providing system according to an embodiment of the present invention;
Fig. 2 is a block diagram showing an example of the structure of a service - information providing apparatus according to the embodiment of the present invention;
Fig. 3 is a block diagram showing an example of the structure of a transmitting apparatus according to the embodiment of the present invention;
Fig. 4 is a block diagram showing an example of the structure of a receiving terminal unit according to the embodiment of the present invention;
Fig. 5 is a schematic diagram showing an example of registration information sent from the service - information providing apparatus to the transmitting apparatus;
Fig. 6 is a schematic diagram showing an example of directory information stored in the transmitting apparatus and the receiving terminal unit;
Fig. 7 is a flow chart showing an example of a service registration process of the service - information providing apparatus;
Fig. 8 is a flow chart showing an example of a directory information registration process of the transmitting apparatus;
Fig. 9 is a flow chart showing an example of a service execution process of the receiving terminal unit; and
Fig. 10 is a flow chart showing an example of a service selection process of the receiving terminal unit.

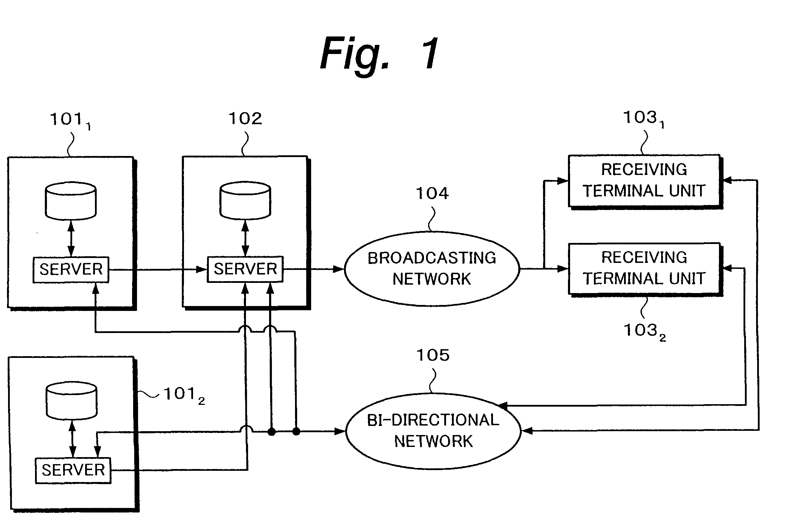

Next, a service providing system according to an embodiment of the present invention will be described. Fig. 1 shows an example of the structure of the system according to the embodiment. Each of service - information providers 101₁ and 101₂ comprises a server and a HDD (Hard Disk Drive). The service - information providers 101₁ and 101₂ provide services and information to their clients. The service - information providers 101₁ and 101₂ are connected to receiving terminal units 103₁ and 103₂ through a bi-directional network 105. The service - information providers 101₁ and 101₂ can provide services and information to clients of the receiving terminal units 103₁ and 103₂ through the bi-directional network 105. The receiving terminal units 103₁ and the 103₂ receive information of services from the service - information providers 101₁ and 101₂ through the bi-directional network 105 or a leased line (not shown) and create directory information with the received service information.

A transmitting apparatus 102 comprises a server and a HDD. The transmitting apparatus 102 creates directory information that contains services and information provided by the service - information providers 101₁ and 101₂. The transmitting apparatus 102 is connected to the receiving terminal units 103₁ and 103₂ through a broadcasting network 104 so that the transmitting apparatus 102 provides the directory information to the receiving terminal units 103₁ and 103₂. A real example of the broadcasting network 104 is a broadcast (for example, a digital satellite broadcast or a digital ground wave broadcast). A real example of the transmitting apparatus 102 is a broadcasting station.

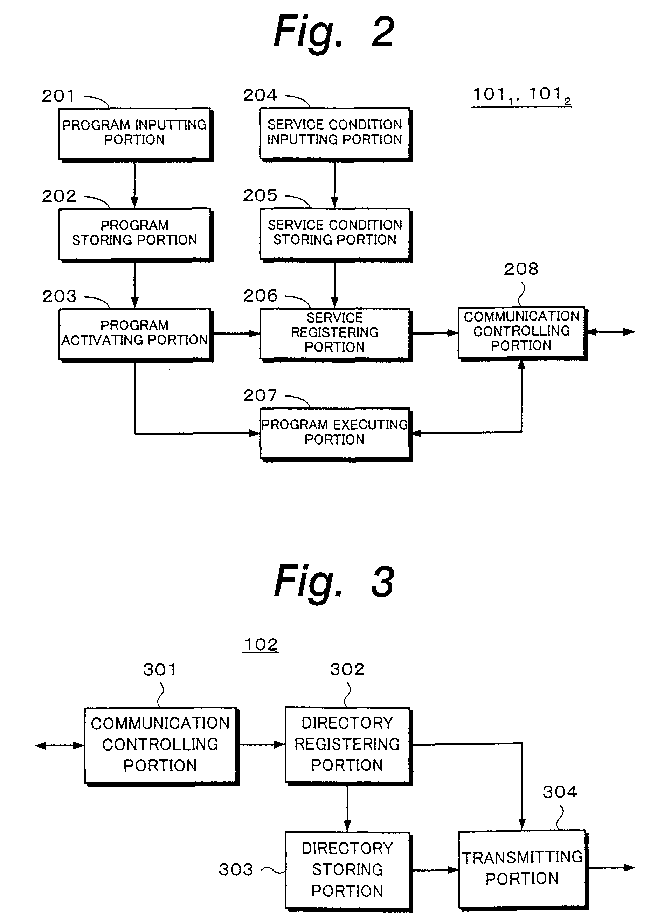

Fig. 2 is a block diagram showing an example of the structure of each of the service - information providers 101₁ and 101₂. A program inputting portion 201 inputs a program that causes the service - information providers 101₁ and 101₂ to provide services. The user manually inputs a program to the program inputting portion 201. Alternatively, a program that is transmitted to the program inputting portion 201 through a communication network. The input program is stored to a program storing portion 202.

A program activating portion 203 activates the stored program. A program executing portion 207 executes the program. When the program activating portion 203 activates the program, a service registering portion 206 is notified that a particular service becomes available. The service registering portion 206 extracts service conditions of the available service from a service condition storing portion 205 and registers the service conditions to the directory of the transmitting apparatus 102 through a communication controlling portion 208 and the bi-directional network 105.

The service conditions stored in the service condition storing portion 205 are various attributes of services that are provided. Real examples of the service conditions are a service content description, a quality of service (QoS), a color attribute of a receiving terminal unit, and an ID. The service conditions are input from a service condition inputting portion 204. The service conditions are manually input. Alternatively, service conditions are automatically input corresponding to operation parameters of a server (applied load, quality of service, and so forth). When a service starts, the service registering portion 206 registers the service. Alternatively, when the service conditions are changed, the service registering portion 206 registers the changed service conditions. To reflect the changed service conditions to the directory of the transmitting apparatus 102, the service registering portion 206 performs a service registration process.

Fig. 3 shows an example of the structure of the transmitting apparatus 102. A communication controlling portion 301 receives service registration requests from the service - information providers 101₁ and 101₂ through the bi-directional network 105. A directory registering portion 302 stores the receives service information as a directory entry to a directory storing portion 303. A transmitting portion 304 transmits the directory information stored in the directory storing portion 303 to the receiving terminal units 103₁ and 103₂ through the broadcasting network 104. The transmitting portion 304 performs a process necessary for the broadcasting network 104 such as an IP multi-cast.

As will be described later, the transmitting apparatus 102 lists information of a plurality of service - information providers that provide the same service, stores it to one directory entry, and adds an algorithm that allows a server to be selected corresponding to service conditions to the directory entry. Thus, when the receiving terminal units 103₁ and 103₂ receive a particular service, they can execute the server selection algorithm added to the directory entry.

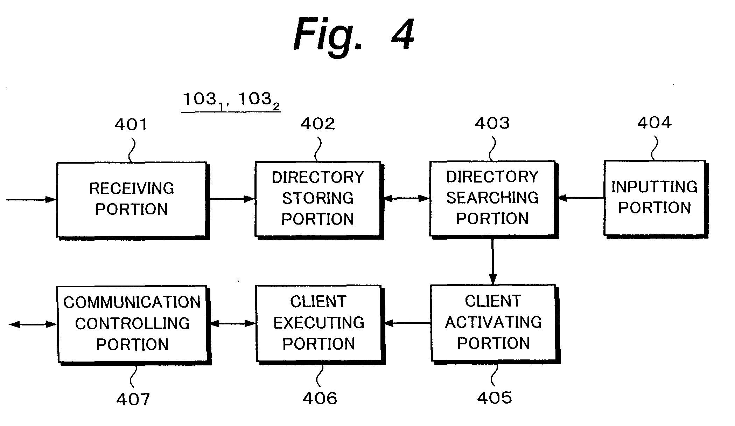

Fig. 4 shows an example of the structure of each of the receiving terminal units 103₁ and 103₂. A receiving portion 401 receives directory information transmitted through the broadcasting network 104. The directory information received by the receiving portion 401 is stored in a directory storing portion 402. In each of the service information provider 101₁ and 101₂, the directory information stored in directory storing portion 303 is synchronized with the directory information stored in the directory storing portion 402.

When the user wants to use a service, he or she inputs a search command and an execution command for the service to an inputting portion 404. A directory searching portion 403 searches the directory storing portion 402 for information about the input service.

In the directory searching portion 403, a client activating portion 405 activates and executes a client (that is a program that allows the user to see and listen to a picture and sound of a service) that sends a service request to the server. When the client is executed, information about the service is sent to the client. In the client, a client executing portion 406 executes the service, communicates with the server through a communication controlling portion 407 and the bi-directional network 105, and receives the service.

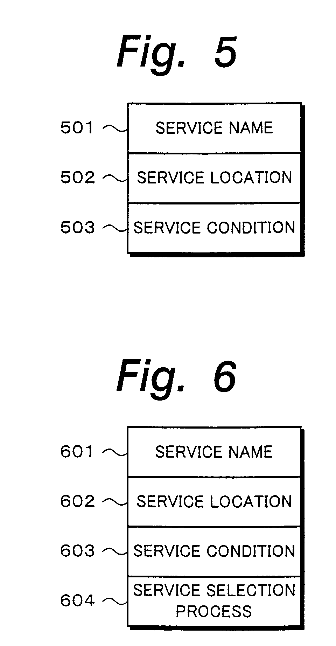

Fig. 5 is an example of registration information that is sent from each of the service - information providers 101₁ and 101₂ to the directory registering portion 302 of the transmitting apparatus 102. A server name 501 identifies a service. A service location 502 is location information of a server that executes a service. In reality, the service location 502 is a set of for example a URL (Uniform Resource Locator), a server IP address, and a port number. A service condition 503 is additional information that represents a service execution environment and a service itself. Corresponding to the service condition, each of the receiving terminal units 103₁ and 103₂ selects a service. The service condition contains a service providing condition such as QoS.

Fig. 6 shows an example of directory information stored in the directory storing portion of each of the transmitting apparatus 102 and the receiving terminal units 103₁ and 103₂. A service name 601 identifies a service. The service name 601 is followed by a service location 602 and a service condition 603. The service condition 603 is followed by a service selection process 604. The service location 602 and the service condition 603 are the same as the service location 502 and the service condition 503, respectively.

To distribute the load of the system, for one service name, a plurality of servers may execute respective programs. In such a case, the directory information contains lists corresponding to the number of server programs. Each list contains the service location 602 and the service condition 603. In other words, the service name is followed by sets of the service location 602 and the service condition 603 corresponding to the number of programs of servers. The last set of the service location 602 and the service condition 603 is followed by the service selection process 604.

The service selection process 604 describes a process with which the client of each of the receiving terminal units 103₁ and 103₂ selects a server that is connected. Since the server selecting method may depend on a service class. Thus, the directory contains a server selection program as the service selection process 604 along with the service list. As a result, the receiving terminal unit side can flexibly select a server. When the client executing portion 406 executes the client, the selection program is executed. As a result, the client is connected to a proper server.

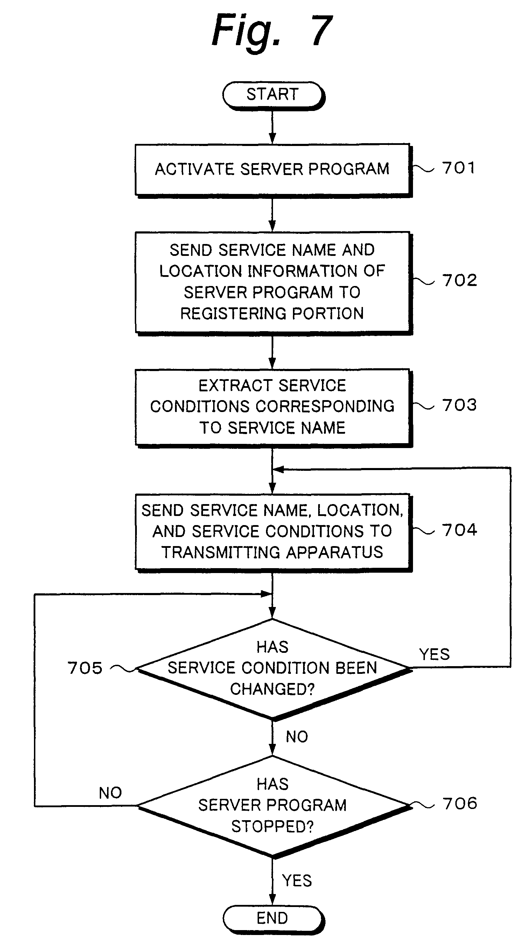

Fig. 7 shows a service registration process of each of the service - information providers 101₁ and 101₂. The program activating portion 203 of each of the service - information providers 101₁ and 101₂ actives a server program for providing a service (at step 701). Thereafter, the flow advances to step 702. At step 702, the program activating portion 203 sends the service name of a service provided by the server and the location information of the server program (the location information contains sets of an IP address and a port number, a URL, and so forth) to the service registering portion 206.

The service registering portion 206 extracts service conditions corresponding to the service name from the service condition storing portion 205 and adds the extracted service conditions to the information about the server (at step 703). At step 704, the service registering portion 206 sends the registration information shown in Fig. 5 to the communication controlling portion 208 through the bi-directional network 105 and registers the registration information to the directory storing portion 402 of the transmitting apparatus 102.

At step 705, the service registering portion 206 determines whether the service conditions have been varied after the activation of the server program. At step 706, the program activating portion 203 determines whether or not the server program has stopped. When the server program has stopped, the service registration process is completed. For example, to deal with a situation of which the load of the system varies after the activation of the server program, the service conditions may be changed. In such a case, the flow returns to step 705. At step 705, the latest service conditions are sent to the transmitting apparatus 102 through the bi-directional network 105.

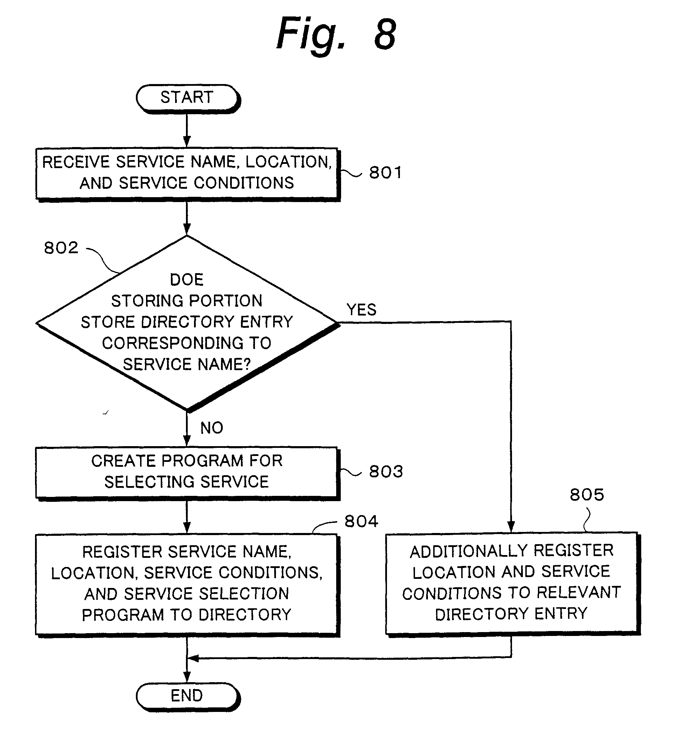

Fig. 8 shows a directory information registration process. The communication controlling portion 301 receives the registration information that contains the service name, the location, and the service information as shown in Fig. 5 from each of the service - information providers 101₁ and 101₂ (at step 801). The directory registering portion 302 determines whether or not the directory storing portion 303 stores a directory entry corresponding to the received service name.

When the directory storing portion 303 stores a directory entry corresponding to the received service name, the directory registering portion 302 registers the received location and service conditions to the directory entry (at step 805). On the other hand, when the directory storing portion 303 does not store a directory entry corresponding to the received service name (at step 802), the directory registering portion 302 creates a program for selecting a service (at step 803). The directory registering portion 302 registers the directory information that contains the received service name, service location, service conditions, and generated service selection program (service selection process) as shown in Fig. 6 to the directory storing portion 303 (at step 804).

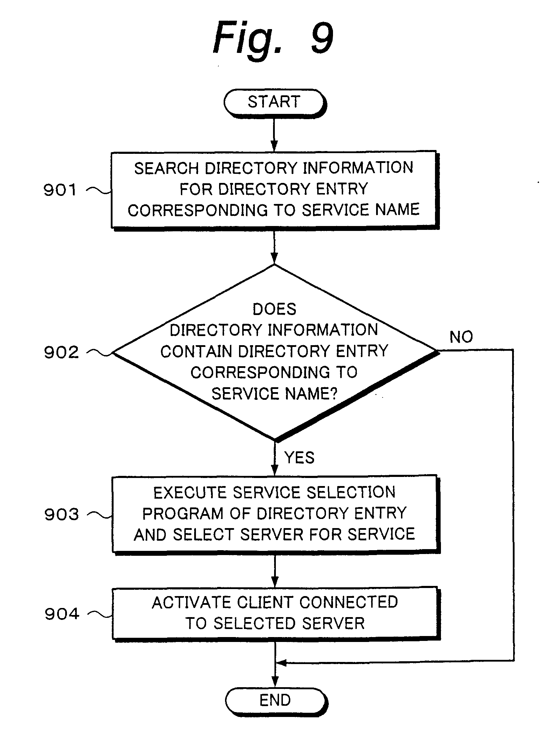

Fig. 9 is a flow chart showing the directory information registration process of each of the receiving terminal units 103₁ and 103₂. The user inputs a desired service name to the inputting portion 404. The directory searching portion 403 searches the directory information for the desired service name (at step 901). At step 902, it is determined whether or not the directory information contains a directory entry corresponding to the input service name.

When the directory information contains a directory entry corresponding to the input service name, the flow advances to step 903. Since the service corresponding to the input service name is available, the directory searching portion 403 executes the service selection program described in the service selection process 604 and selects a proper server for the service. The client activating portion 405 activates a client that is connected to the selected server and uses the service through the client executing portion 406 and the communication controlling portion 407 (at step 904).

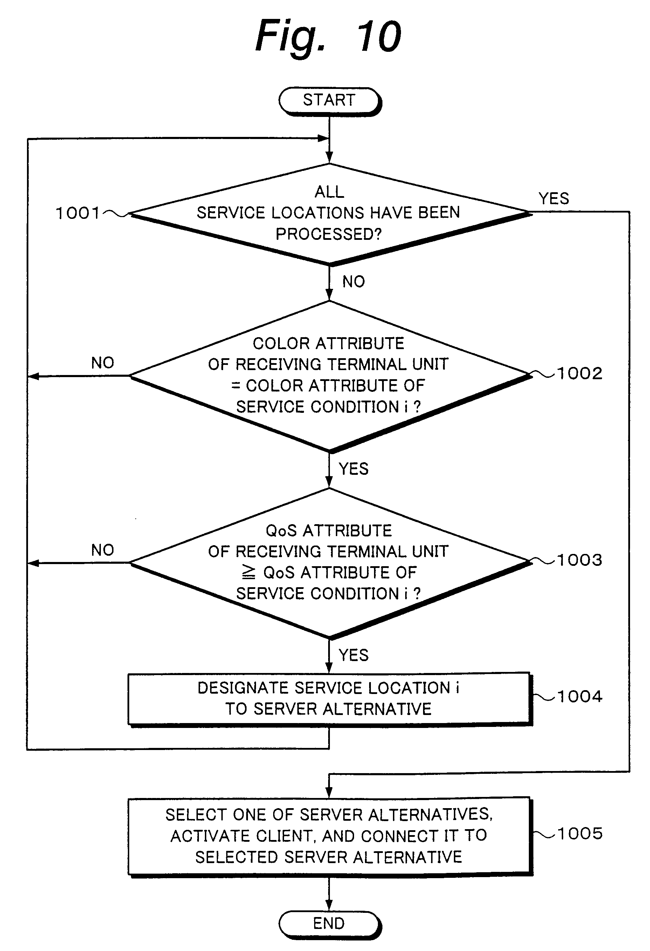

Fig. 10 is a flow chart showing the service selection process. As was described above, the receiving terminal unit searches the directory information for a directory entry. At step 903 shown in Fig. 9, the receiving terminal unit executes the service selection program and selects a proper server for the service. The server selection program is sent as the service selection process 604 contained in the directory entry from the transmitting apparatus 102. The service selection process 604 checks the profile of each of the receiving terminal units 103₁ and 103₂ and selects a server for a service corresponding to the performance of each of the receiving terminal units 103₁ and 103₂. The profile (not shown) of each of the receiving terminal units 103₁ and 103₂ can be supplied to the directory searching portion 403.

At step 1001 shown in Fig. 10, it is determined whether or not all service locations i contained in a particular directory entry have been processed. Until all the service locations are processed, a loop from step 1001 to step 1004 is repeated. At step 1002, it is determined whether or not the color display performance attribute of the receiving terminal unit matches the color attribute of the service condition 603. For example, when the color type of the receiving terminal unit is gray scale, a server that provides a full color service is not selected.

At step 1002, when the color display performance matches the color attribute of the service condition 603, the flow advances to step 1003. At step 1003, it is determined whether or not the network band (QoS) attribute of the receiving terminal unit is equal to or greater than the QoS attribute of the service condition 603. When the receiving terminal unit is connected to a network having a transmission rate of 64 kbps, a service having a transmission rate of 64 kbps or greater is not available. Thus, a service that requires a band greater than 64 kbps cannot be selected as the service condition 603.

A service location i that satisfies the conditions at steps 1002 and 1003 is designated as a server alternative for the service (at step 1004). Thereafter, the flow returns to step 1001. When the process for selecting server alternatives is completed, the flow advances to step 1005. At step 1005, the client is activated and connected to one of server alternatives. As a result, the service is provided to the client.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention. The service conditions of the server are not limited to the above- described color attribute, service quality, and communication band (data transmission rate). In addition, the service conditions may be a regional limitation, a client software version, and a server operating time range. In addition, each block of the structures shown in Figs. 2, 3, and 4 can be accomplished by either hardware or software.

According to embodiments of the present invention, the information providing apparatus transmits information representing the quality of service and the service condition to the transmitting apparatus along with the server location. The transmitting apparatus collects information from a plurality of server apparatuses that provide the same service. Directory information that contains an algorithm for selecting a proper one from the plurality of server apparatuses is created. The directory information is transmitted to a plurality of receiving apparatuses. When a receiving apparatus receives a service, the receiving apparatus can properly pre-select one from a plurality of servers corresponding to the server selection algorithm contained in a directory entry for a service. As a result, the load of the server can be distributed. In addition, the receiving apparatus side can autonomously perform a process corresponding to the service providing condition of each server.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A service providing apparatus, comprising:
program inputting means for inputting a server program for executing a service;
program activating means for activating the server program;
program executing means for executing the server program;
service condition storing means for storing a service condition about a service that is provided;
service registering means for registering a service to a directory along with its service condition; and
communication controlling means for controlling a communication,
wherein the service condition of the service is registered to the directory along with location information of a server that provides the service.

2. The service providing apparatus as set forth in claim 1,
wherein said communication controlling means controls a communication with a transmitting apparatus through a bi-directional network.

3. The service providing apparatus as set forth in claim 1,
wherein said communication controlling means controls a communication with a receiving apparatus through a bi-directional network.

4. A transmitting apparatus, comprising:
communication controlling means for controlling a communication with a service providing apparatus;
directory registering means for registering directory information received through said communication controlling means;
directory storing means for storing the registered directory information; and
transmitting means for transmitting the content of said directory storing means to a receiving apparatus,
wherein information about a plurality of servers that provide the same service is stored to one directory entry,
wherein a server selection algorithm corresponding to the service conditions of the servers is added to the directory entry, and
wherein the directory information containing the server selection algorithm is stored to said directory storing means.

5. The transmitting apparatus as set forth in claim 4,
wherein the directory entry is identified by a service name.

6. The transmitting apparatus as set forth in claim 4,
wherein the information about the servers contains the locations of the servers.

7. The transmitting apparatus as set forth in claim 4,
wherein said transmitting means transmits directory information to a receiving apparatus through a broadcasting network.

8. A receiving apparatus, comprising:
receiving means for receiving directory information;
directory storing means for storing the received directory information;
directory searching means for searching the content of the directory corresponding to searching and executing requests of the user;
client activating means for activating a client program for receiving a requested service corresponding to the searched result;
client executing means for executing the activated client program;
client executing means for executing the activated client program; and
communication controlling means for controlling a communication between a client and a server,
wherein a desired service is searched from the directory and a server selection algorithm stored in the searched directory entry is executed so as to select a server connected to the client.

9. The receiving apparatus as set forth in claim 8,
wherein the directory entry is identified by a service name.

10. The receiving apparatus as set forth in claim 8,
wherein the directory entry contains the locations of the servers.

11. The receiving apparatus as set forth in claim 8,
wherein the server selection algorithm is executed with reference to service conditions of the directory entry.

12. A receiving method, comprising the steps of:
receiving directory information from a transmitting apparatus;
storing the received directory information;
searching the stored directory for a desired service corresponding to a search request and an execution request of the user;
executing a server selection algorithm stored in a searched directory entry so as to select a server connected to a client;
activating a client program for receiving the requested service from the selected server; and
executing the activated client program.
